# EUROPÄISCHE PATENTSCHRIFT

(11) **EP 3 390 995 B1**
(45) Veröffentlichungstag und Bekanntmachung des Hinweises auf die Patenterteilung: **27.12.2023**
(21) Anmeldenummer: 16800955.3
(22) Anmeldetag: 23.11.2016
(51) Int. Cl.: H01M 50/569, H01M 10/42, G01K 1/14, G01K 17/20, H01M 10/48

(54) **MESSAUFBAU ZUR FUNKTIONSKONTROLLE VON WIEDERAUFLADBAREN BATTERIEN**
MEASUREMENT SET-UP FOR CONTROLLING THE FUNCTION OF RECHARGEABLE BATTERIES
INSTALLATION DE MESURE POUR LE CONTRÔLE FONCTIONNEL DE BATTERIES RECHARGEABLES

(30) Priorität: 17.12.2015 CH 18552015
(43) Veröffentlichungstag der Anmeldung: 24.10.2018
(73) Patentinhaber: greenTEG AG, 8153 Rümlang (CH)
(72) Erfinder: DURRER, Lukas, 9642 Ebnat-Kappel (CH); GLATZ, Wulf, 8005 Zürich (CH); HELBLING, Thomas, 8500 Frauenfeld (CH)
(74) Vertreter: Prins Intellectual Property AG
(86) Internationale Anmeldenummer: PCT/EP2016/078546
(87) Internationale Veröffentlichungsnummer: WO 2017/102272

(56) Entgegenhaltungen:
- WO-A1-2013/017748
- WO-A1-2014/069437
- WO-A1-2014/196290
- DE-A1-102010 062 207
- DE-A1-102014 017 080

## Beschreibung

### Technisches Gebiet

Die vorliegende Erfindung beschreibt einen kalorimetrischen Messaufbau mit einer Sensoreinheit zur Qualitätskontrolle des Betriebs einer Batterie mit einer Kathode und einer Anode, insbesondere zur Bestimmung des Gesundheitszustandes einer Batterie bzw. eines Batteriestapels umfassend mehrere Batterien, wobei der Messaufbau bzw. die Sensoreinheit via einer Kommunikationsverbindung mit einer Datenverarbeitungselektronik verbunden ist und damit Sensormesswerte aufgenommen und verarbeitet werden, ein Verfahren zur Qualitätskontrolle einer Batterie und die Verwendung eines kalorimetrischen Messaufbaus.

### Stand der Technik

In dieser Anmeldung geht es um wiederaufladbare Batterien bzw. Batteriestapeln, welche auch Akkumulatoren bzw. Akkumulatorpack genannt werden können, welche im Verlaufe ihres Lebens eine Vielzahl von Lade und Entladezyklen durchlaufen. Kalorimetrische Tests an derartigen Batterien und Batteriestapeln sind Standard in der Industrie und Wissenschaft. Heute sind aber Batteriemanagementsysteme gefragt, welche die Entladung und Aufladung von Batterien und Batteriestapeln steuern können, wobei auch die thermische Belastung der einzelnen Batterien berücksichtigt wird.

Mit kalorimetrischen Tests von Batterien kann u.a. der Gesundheitsstatus (state of health, SOH) der Batterie bestimmt werden. Fehlerhafte Batterien aus der Produktion können detektiert und ausgesondert werden. Zusätzlich sind diese Messungen sehr nützlich zur Untersuchung und Optimierung der Batterie in Bezug auf ihre Lebensdauer. Durch genügend gute Auflösung kann das Entropieprofil während des Ladens und Entladens bestimmt werden, was als Fussbadruck zur Bestimmung von Gesundheitszustand "State of Health" (SOH), Ladezustand "State of Charge" (SOC) und Funktionszustand "State of Function" (SOF) dienen kann.

Die Bestimmung des Gesundheitszustandes (SOH) wird für die Bestimmung des Ladezustandes (SOC) und auch des Funktionszustandes SOF (state of function) eingesetzt. Diese Informationen sind wichtig für den Endbenützer um zu sehen, wie stark die Batterie/der Batteriestapel geladen ist und wie lange sie noch entladen werden kann. Auch ist es wichtig zu wissen, wann die Batterie ersetzt werden muss. Solche Daten werden heutzutage über diverse Messgrössen, wie Temperatur, Spannung und Strom über komplexe Berechnungsmodelle ermittelt, wie beispielsweise in der US2015311736 offenbart.

In der Publikation von Kobayashi et al. [Precise Electrochemical Calorimetry of LiCoO2/Graphite Lithium-Ion Cell, Journal of The Electrochemical Society, 149 (8) A978-A982 (2002)] wurde gezeigt, dass die SOH Bestimmung über das Entropieprofil, welche kalorimetrisch beim Laden und entladen aufgenommen werden kann, gemacht werden kann.

Ein Batteriekalorimeter ist in der US 4416551 dargestellt. Dieses Gerät ist speziell für das Testen von Vorgängen in Batterien entwickelt worden und ist sowohl Batterie als auch Kalorimeter. Aus apparativen Gründen kann ein solcher Aufbau nicht zur standardmässigen Bestimmung der Wärmeentwicklung und des Wärmeflusses von Batterien verwendet werden. Da die Anwendungsgebiete in denen Batterien verwendet werden, oft im Bereich Mobilität liegen und in der Regel ein geringes Gewicht der Gesamtapparatur voraussetzen, ist ein derartiges Kalorimeter unbrauchbar.

In heutigen Apparaturen können Batterien direkt als abgeschlossene Einheit ins Kalorimeter gegeben und getestet werden, so wie das in der WO 2012/125491 gezeigt wird. Hierbei, wird die Batterie oder der Batteriestapel oder Stack in die Kalorimeterkammer gelegt und über die elektrischen Anschlüsse kontaktiert. Die Kalorimeterkammer ist von einem Fluid umgeben, durch welches die Temperatur auf der Batterieoberfläche (durch Wärmeaustausch zwischen Kammer und Fluid) kontrolliert wir. In der Wand zwischen der Inneren Kammer mit der Batterieprobe und der Kammer mit der Flüssigkeit, ist eine Vielzahl von Wärmeflusssensoren befestigt, welche den Wärmeaustausch zwischen den beiden Kompartimenten detektieren. Wenn nun die Batterie über den elektrischen Anschluss geladen oder Entladen wird, wird die u.a. exotherme und endotherme Reaktionsenergie welche von der Batterie an die Umgebung abgegeben wird oder von der Umgebung aufgenommen wird, detektiert.

Solche Kalorimeter für Batterien sind kommerziell erhältlich und sehr nützlich für die Weiterentwicklung von Batterien und zur Weiterentwicklung des thermischen Energiemanagement. Nachteilig an den Apparaturen ist, dass sie gross und kostspielig sind. Zudem ist der experimentelle Aufwand zum Testen einer Batterie oder eines Batteriestapels relativ gross. Der Einsatz von solchen Kalorimetern in der Anwendung der Batterie ist auf Grund ihres Aufbaus nicht möglich. Auch können diese Kalorimeter nicht für das Testen von vielen Batterien verwendet werden. Hierfür werden einzelne Batterien aus der Produktion ausgesucht und thermisch getestet.

Ein weiterer Nachteil bislang bekannter Kalorimeter ist, dass mit ihnen nur die Gesamtwärmeentwicklung der gesamten Batterie bzw. des kompletten Batteriestapels detektiert werden kann und die Messung nicht ausreichend dynamisch erfolgt, wodurch auch die Reaktion auf die Messwerte in einem Batteriemanagementsystem einen störenden Verzug hat.

Zur Qualitätskontrolle nach der Produktion von Batteriezellen, werden heutzutage diverse Tests an den Zellen durchgeführt. Unter anderem auch elektrische Lade- und Entlade-Tests, wobei dann Zustandsgrössen wie Temperatur, Widerstand, Spannung und Strom gemessen werden. Diese Tests sind äusserst aufwändig und dauern sehr lange. Auch werden die Batterien beim Kunden vor dem Einbau in ein System nochmals getestet um sicher zu gehen, dass keine Batterien fehlerhaft sind. Der Einbau einer fehlerhaften Batterie wirkt sich auf den gesamten Batteriestapel aus, welcher in der Lebensdauer oder Kapazität reduziert wäre.

Um eine lange Lebensdauer und Sicherheit vor thermischem "runaway" des Batteriestapels in der Anwendung, zum Beispiel in einem Auto, garantieren zu können ist ein mitführbares Batterieüberwachungssystem inklusive Kühlungseinrichtung der Batterien auf Stapelebene oder sogar auf Batterieebene von Vorteil. Ein solches System ist zum Beispiel aus der US5701068 bekannt. Damit Batterien optimal betreibbar sind, kann der Ladezustand der Batterie, die Innentemperatur bzw. die Wärmeentwicklung der Batterie detektiert werden. Der Gesundheits- und Ladezustand der Batterie wird über die Zellspannung und den Zellwiderstand bestimmt. Jedoch gibt es dabei Ungenauigkeiten in der Erfassung der Daten, da diese abhängig sind von der Innentemperatur der Zelle. Entsprechend werden Temperatursensoren an der Batterie angebracht, deren Messwerte ausgelesen und analysiert werden. Die schaltungstechnisch gelöste Überwachung des Batteriezustandes gemäss US5701068 ist aber noch zu ungenau und zu träge.

Es sind weiter beispielsweise die US 2014/0360207 und US2013/0196184 bekannt, welche eine thermische Überwachung der Batterie mittels Temperatursensoren durchführen, wobei ein Kühlsystem bei Bedarf gestartet wird. In der US 2014/0360207 wird die Temperatur der Batterie durch thermoelektrische Elemente (Peltier-Elemente) kontrolliert, während in der US2013/0196184 die Temperstabilisierung der Batterien über eine Kühlflüssigkeit gewährleistet wird. Geregelt wird diese Kühlung in beiden Fällen über mindestens einen Temperatursensor, welcher jeweils die Temperaturentwicklung an der äusseren Oberfläche der Batterie misst. Temperaturmessung ist eine Zustandsmessung und ist deshalb für die dynamische Messung des Wärmeflusses nur bedingt geeignet.

WO2013/017748 beschreibt eine Vorrichtung zur Lokalisierung von Hot Spots mit Wärmedurchflussmesser.

Aus DE102014017080 geht ein kalorimetrischer Messaufbau mit einer Sensoreinheit hervor, welcher zur Qualitätskontrolle des Betriebs einer Batterie mit einer Kathode und einer Anode, möglicherweise auch zur Bestimmung des Gesundheitszustandes der Batterie einsetzbar ist. Mit der Sensoreinheit wird ein erster Temperaturgradient mittels eines Temperatursensors gemessen. Aus dem ersten Temperaturgradienten wird auf einen ersten Wärmefluss geschlossen. Um den ersten Wärmestrom auszugleichen, wird eine Temperiereinrichtung genutzt, welche einen zweiten Temperaturgradienten erzeugt. Die DE102014017080 beschreibt damit im Allgemeinen eine Temperaturgradientenmessung mittels Temperatursensoren und eine Temperierung, wobei T1 und T1 beider Temperaturgradienten auf dem gleichen Wert gehalten werden soll.

Über die benötigte Heizleistung kann dann etwas über die Wärme Produktion im Inneren der Batterie ausgesagt werden. Nachteil bei der Verwendung der beiden Temperatursensoren ist, dass man dabei eine genügend grosse Temperaturdifferenz aufbauen muss. Vor allem bei metallischen Leitern benötigt dies eine relative grosse räumliche Distanz der beiden Temperatursensoren. Parasitäre Wärmeverluste müssen kompensiert werden, wobei die geringe Sensitivität der Temperaturmessung die Messung von Phasenübergängen erschwert. Grundsätzlich wird der gesamte Messaufbau durch Integration der Temperiereinrichtung in Form eines Heizers mechanisch und elektrisch komplexer, womit der Messaufbau störungsanfälliger wird. Die Heizung und eine damit verbundene Heizregelung dieser Methode erhöht selbstverständlich auch den Energieverbrauch.

Die aus dem Stand der Technik bekannten Messmöglichkeiten zur Bestimmung des Gesundheitszustandes (SOH) einer Batterie oder eines Batteriestapels, welche vor Ort an einer Batterie durchführbar sind, können immer noch keine ausreichend genauen und dynamischen Messergebnisse liefern. Die Qualitätssicherung von Batterien, sowie die Steuerung eines Batteriemanagementsystems mit den bekannten Messaufbauten sind noch nicht ausreichend gut möglich oder weisen apparative Nachteile auf.

### Darstellung der Erfindung

Die vorliegende Erfindung hat sich zur Aufgabe gestellt einen Messaufbau zu schaffen, welcher eine reproduzierbare und ausreichend genaue Qualitätskontrolle einer Batterie erreicht und insbesondere zur Bestimmung des Gesundheitszustandes (SOH) einer Batterie bzw. eines Batteriestapels beim Durchlauf mindestens eines Ladezyklus, Entladezyklus, Teilsladevorgangs oder Teilsentladevorgangs der Batterie bzw. eines Batteriestapels einsetzbar ist. Auch ist die Erfindung dazu geeignet fehlerhafte Batterien während Ruhe- und Lagerungsphasen durch das thermischen detektieren von nicht erwünschten, von einem inneren Kurzschluss verursachten, chemischen Vorgängen zu erkennen.

Es wurde nach einem Messaufbau gesucht, welcher wahlweise dauerhaft oder kurzzeitig an einer Batterie oder einem Batteriestapel befestigbar ist und während Lade- oder Entladevorgängen eine ortaufgelöste kalorimetrische Datenerfassung ermöglicht, aus welcher durch Vergleich mit der Gesundheitszustandes (SOH) einer Batterie bestimmbar ist.

Der Messaufbau dient zur Überprüfung der Batterie nach der Herstellung und während ihres Gebrauchs und kann Teil eines Batteriemanagementsystems sein, welches die thermische Belastung von Batterien bei der Lagerung, aber vor allem während der Entladung und Aufladung der Batterien überwacht und gegebenenfalls durch Kühlen oder Heizen steuert. Allenfalls werden die Messwerte im Batteriemanagementsystem weiterverarbeitet je nach Gegebenheit mit weiteren Messdaten wie Temperatur, Spannungsverlauf oder elektrischem Widerstand kombiniert um dem Anwender verlässliche Informationen zum Gesundheitszustandes (SOH), dem Ladezustand (SOC), dem Funktionszustandes (SOF) und der noch zu erwartenden Lebensdauer der Batterie oder des Batteriestapels anzuzeigen.

Ebenfalls Aufgabe der Erfindung war die Schaffung eines Verfahrens zur Qualitätskontrolle einer Batterie, insbesondere zur Bestimmung des Gesundheitszustandes (SOH) einer Batterie bzw. eines Batteriestapels, wobei der Messaufbau mit der Batterie verbunden wird und der Durchlauf mindestens eines Ladezyklus, Entladezyklus, Teilladevorgang oder Teilentladevorgang gestartet wird und Vergleichswerte aufgenommen werden.

Diese Aufgabe wird durch einen Messaufbau mit den Merkmalen des Patentanspruchs 1 gelöst, wobei das Verfahren gemäss Ansprüchen 9 bis 13 ausgeführt wird.

### Kurze Beschreibung der Zeichnungen

Weitere Merkmale, Einzelheiten und Vorzüge der Erfindung ergeben sich aus der nachfolgenden Beschreibung bevorzugter Ausführungsformen der Erfindung sowie der Zeichnungen. Es sind dargestellt in
- Figur 1: eine schematische Aufsicht auf einen kalorimetrischen Messaufbau mit einer Sensoreinheit.
- Figur 2a: zeigt eine schematische Seitenansicht einer wieder aufladbaren Batterie mit angeordneter Sensoreinheit, während
- Figur 2b: einen Batteriestapel mit Sensoreinheit in einer schematischen Ansicht zeigt.
- Figur 3a: zeigt eine Schnittansicht einer Kathode mit an einem Batteriekontakt befestigter Sensoreinheit, während
- Figur 3b: eine detaillierte Schnittansicht durch die Sensoreinheit mit Kühlkörper gemäss markiertem Einsatzbild aus Figur 3a.
- Figur 4a: zeigt einen Batteriestapel mit vier Batterien, wobei jeweils eine Sensoreinheit an der Kathode jeder Batterie angeordnet ist, von welcher je eine Kommunikationsverbindung zur Datenverarbeitungselektronik führt, während
- Figur 4b: einen Batteriestapel zeigt, wobei an jeder Kathode jeder Batterie eine Sensoreinheit über eine Reihenschaltung mit einer nicht dargestellten Datenverarbeitungselektronik verbunden ist.
- Figur 5a: zeigt Wärmeflussmessungen gegen die Zeit an vier Batterien eines Batteriestapels, während die äusseren Bedingungen verändert werden, während
- Figur 5b: Wärmeflussmessungen gegen die Zeit an vier Batterien eines Batteriestapels zeigen, wobei ein reproduzierbares Entladungsexperiment wiederholt durchgeführt wird.

### Beschreibung

Aus der Wärmeentwicklung bzw. Änderung des Wärmeflusses an einer Batterie 5 beim Auf- und Entladen, sowie der Variation des Wärmeflusses an einer Batterie 5 während der Lagerung und dem Transport kann die Qualität bzw. der Gesundheitszustand der Batterie 5 bestimmt werden.

Dies wird mit einem kalorimetrischen Messaufbau möglich, welcher mindestens eine Sensoreinheit 1 mit mindestens einem Wärmeflusssensor 2 umfasst. Aus dem Stand der Technik sind unterschiedlich gestaltete Wärmeflusssensoren 2 bekannt, wie beispielsweise aus der WO2014/102242 des Anmelders bekannt, wobei Wärmeflusssensoren 2 die Wärmeenergie die pro Zeiteinheit von einer wärmeren zu einer kälteren Seite fliesst (Wärmeleistung, Wärmefluss) messen. Der Wärmefluss wird gemessen, indem eine von der Grösse des durch die Fläche des Wärmeflusssensors 2 fliessenden Wärmeflusses abhängige Spannung erzeugt wird.

Die Sensoreinheit 1 mit dem mindestens einen Wärmeflusssensor 2 kann direkt über einen Kommunikationsverbindung 12 an eine Datenverarbeitungselektronik 11 angeschlossen sein.

Bevorzugt umfasst die Sensoreinheit 1 eine Leiterplatte 4 auf welcher der mindestens eine Wärmeflusssensor 2 angeordnet ist. Optional sind noch ein oder mehrere Zusatzsensoren 3, beispielsweise ein Temperatur-, Feuchte-, Strom- oder Spannungssensor 3 auf der Leiterplatte 4 angeordnet. Zusätzlich können noch ein Datenspeicher, eine Anzeige, beispielsweise eine LED, ein Prozessor und eine Spannungsquelle, insbesondere eine Batterie auf der Leiterplatte 4, die Sensoreinheit 1 bildend, angeordnet sein. Auch eine Datenerfassung/Verarbeitung kann auf einem Chip auf der Leiterplatte 4 ausgestaltet sein.

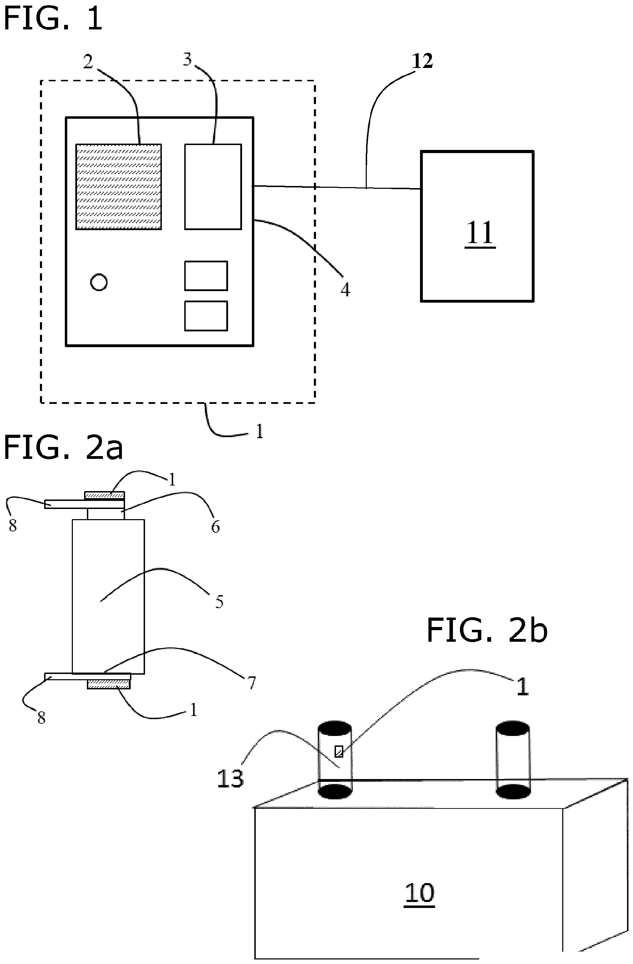

Wie in Figur 1 dargestellt kann die Sensoreinheit 1 als ein kompaktes Bauteil ausgebildet sein. Diese monolithische Ausgestaltung weist Vorteile auf, da bei Platzierung der Sensoreinheit 1, der Wärmeflusssensor 2 und gegebenenfalls Zusatzsensoren 3 in einem Installationsschritt befestigt wird. Der Wärmeflusssensor 2 und die anderen Bauteile können aber auch von der Leiterplatte 4 beabstandet via Kabel mit der Leiterplatte 4 verbunden sein. Dies kann den Vorteil haben, dass die einzelnen Zustandsgrössen an den jeweils optimalen Stellen gemessen werden könnten, ohne von der Leiterplatte 4 selber beeinflusst zu werden.

Die Sensoreinheit 1 bzw. die Leiterplatte 4 ist über eine Kommunikationsverbindung 12 mit einer Datenverarbeitungselektronik 11 verbunden, welche den kalorimetrischen Messaufbau bilden. Auf der Leiterplatte 4 sind elektronische Komponenten angeordnet, welche das aufgenommene Wärmeflusssignal verstärken und über die Kommunikationsverbindung 12 an die Datenverarbeitungselektronik 11 weiterleiten. Ein Datenspeicher kann entweder auf der Leiterplatte 4 oder in der Datenverarbeitungselektronik 11 angeordnet sein. Die Datenverarbeitungselektronik 11 kann sich auch in Form eines Prozessors und Datenspeichers direkt auf der Leiterplatte 4 befinden. Der Datenspeicher nimmt die Daten des mindestens einen Wärmeflusssensors 2 auf und macht damit Vergleiche von aufgenommenen und Referenzmesswerten möglich. Auch können entsprechende Algorithmen zum Einsatz kommen, welche die Signale der Sensoren (eg. Temperatur, Storm, Spannung) miteinander verarbeiten, zum Beispiel temperaturkompensiertes Wärmeflusssensorsignale oder Berechnung der Lebensdauer der Batterie über das Entropie Profil kombiniert mit dem inneren Zellwiederstand und der Kapazitätsverminderung.

In Figur 2 ist eine wieder aufladbare Batterie 5 schematisch beispielhaft als Zylinderzelle dargestellt. Ein Kathodenableiter 6 und ein gegenüberliegender Anodenableiter 7 sind jeweils mit einem Batteriekontakt 8 versehen, mittels welchem der Anschluss der Batterie 5 an einen Verbraucher oder die Verbindung mit weiteren Batterien 5 eines Batteriestapels erfolgt. Entsprechend muss der Batteriekontakt 8 elektrisch und thermisch leitfähig sein, insbesondere aus Metall bestehen. Um die Qualität der Batterie 5 zu bestimmen kann eine Sensoreinheit 1 dauerhaft oder temporär an dem Batteriekontakt 8 des Kathodenableiters 6 und/oder des Anodeableiters 7 befestigt werden. Der Rest des kalorimetrischen Messaufbaus, die Kommunikationsverbindungen 12 und die Datenverarbeitungselektronik 11 sind hier weggelassen. In der Praxis reicht die Befestigung der Sensoreinheit 1 entweder am Kathodenableiter 6 oder Anodenableiter 7 aus. Jedoch kann es auch hilfreich sein beide Elektroden zu überwachen. Wenn es die räumlichen Gegebenheiten erlauben, wie das bei einer Pouch Zelle der Fall ist, kann der Wärmeflusssensor 2 bzw. die Sensoreinheit 1 direkt auf dem Kathodenableiter 6 oder Anodenableiter 7 befestigt sein, wobei dann der elektrische Kontakt neben dem Wärmeflusssensor 2 bzw. der Sensoreinheit 1 vorgenommen wird.

Der Wärmeflusssensor 2 kann entsprechend an einem Elektrodenzuleiter 13 eines Batteriestapels 10 thermisch leitend befestigt werden. Derartige Batteriestapel 10 weisen üblicherweise ein Gehäuse auf, aus welchem die Elektrodenzuleiter 13 zum Anschluss herausragen. Die Batteriekontakte 8 der einzelnen Batterien 5 in einem solchen Batteriestapel 10 können mit einer elektrischen Isolationsplatte und einer darauf angeordneten thermischen Homogenisierungsplatte überdeckt sein. Es kann auch vorkommen, dass nur die Kontakte 8 mit einer elektrisch isolierenden Schicht überzogen sind worauf dann die thermische Homogenisierungsplatte stoffschlüssig anliegt. Auf der thermischen Homogenisierungsplatte kann entsprechend ein Wärmeflusssensor 2 angeordnet werden, welcher den Wärmefluss des gesamten Batteriestapels 10 ermitteln kann. Damit könnten einige Wärmeflusssensoren 2 bzw. Sensoreinheiten 1 eingespart werden und trotzdem aussagekräftige Messungen mit dem kalorimetrischen Messaufbau durchgeführt werden.

Optimal wäre, wenn die Batterien des Batteriestapels 10 elektrisch und thermisch parallel geschaltet sind. Da standardmässig die Batteriestapel 10 jedoch in Serie geschaltet sind, wäre es wichtig eine zusätzliche thermische Parallelschaltung zu den Elektroden zu gewährleisten, wobei die elektrische Schaltung dann in Serie sein kann. Die thermische Parallelschaltung, kann beispielsweise aus Cu oder Al Streifen oder Platten bestehen welche an den Kathodenableiter 6 und Anodenableiter 7 über eine elektrische Isolierung befestigt sind und dann alle an einem Punkt zum Beispiel an den entsprechenden Elektrodenzuleiter 13 zusammenlaufen.

Auch wäre es denkbar, dass die thermische Verbindung nicht an den Ableitern 6, 7, sondern an den Batteriekontakten 8 bzw. am Gehäuse stattfindet, welches bestenfalls wiederum gekühlt wird, wobei sich dann der Wärmeflusssensor 2 oder die Sensoreinheit 1 zwischen dem Gehäuse und den Wärmeleitelementen befinden. Auch in diesem Falle kann die Sensoreinheit 1 entweder von dem Gehäuse oder von den Wärmeleitelementen umschlossen sein, so dass optimal gekühlt oder geheizt werden kann.

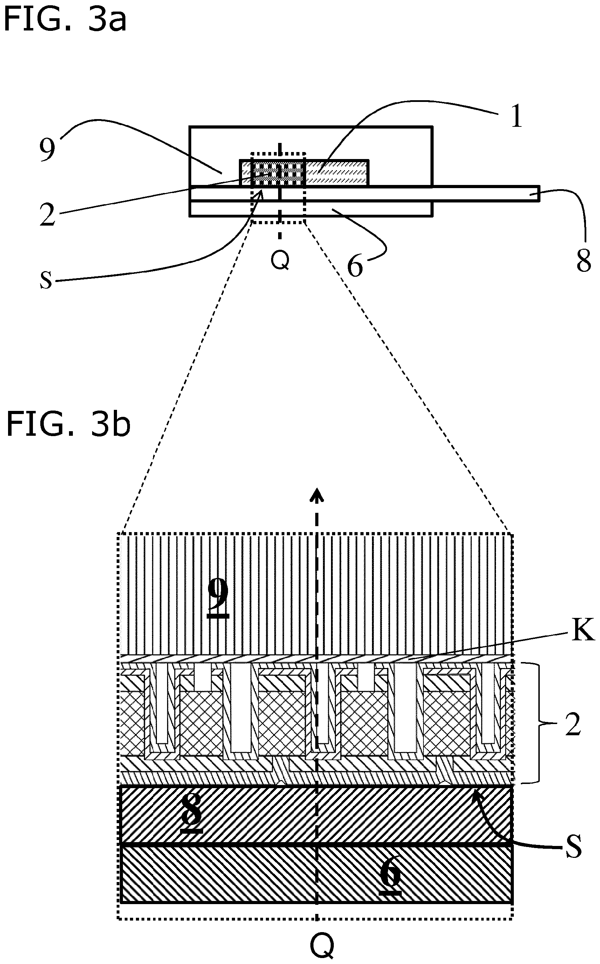

Wie in Figur 3a erkennbar ist der mindestens eine Wärmeflusssensor 2 der Sensoreinheit 1 im Randbereich der Sensoreinheit 1 angeordnet, sodass bei Befestigung der Sensoreinheit 1 der Wärmeflusssensor 2 mit einer Sensorseite S in direkten thermischen Kontakt mit dem Batteriekontakt 8 bringbar ist. Der mindestens eine Wärmeflusssensor 2 ist derart am Batteriekontakt 8 befestigt, dass ein Wärmefluss in seiner Querrichtung Q vom Kathodenableiter 6 über den Batteriekontakt 8 durch den Wärmeflusssensor 2 fliessen kann. Der Wärmeflusssensor 2 kann lösbar mit dem Batteriekontakt 8, beispielsweise durch eine mechanische Pressbefestigung oder stoffschlüssig durch Klebung auf dem Batteriekontakt 8 verbunden sein. Optional können noch weitere thermisch leitfähige Schichten zwischen Batteriekontakt 8 dem Wärmeflusssensor 2 angeordnet sein, wodurch eine mittelbare Verbindung vorliegt. Durch eine Spannungsmessung wird der Wärmefluss durch den Wärmeflusssensor 2 bestimmt. Bei einer Pouchzelle, welche flache Elektrodenableiter 6, 7 hat, muss die Sensoreinheit 1 nicht unbedingt in den elektrischen Kontakt mit eingeschlossen sein, sondern kann an einer anderen Stelle auf dem Elektrodenableiter 6, 7 durch eine mechanische Pressbesfestigung oder durch kleben befestigt sein.

Die dem Batteriekontakt 8 abgewandte Seite der Sensoreinheit 1 und die Kontaktseite des Wärmeflusssensors 2 sind mit einem Kühlkörper 9 versehen, welcher hier die Sensoreinheit 1 optional auch seitlich umschliesst. Der Kühlkörper 9 umschliesst damit den Wärmeflusssensor 2 bzw. die Leiterplatte 4 rückseitig und seitlich. Das hat vor allem für aktive Batterie Kühlung/Heizung den Vorteil, dass die Sensoreinheit 1 als zusätzlicher thermischer Widerstand nicht ins Gewicht fällt.

Wenn keine Kühlung/Heizung über die Elektrodenzuleiter stattfinden soll, kann der Wärmeflusssensor 2 auch so zwischen den Kühl-/Heizkörper 9 geschaltet werden, dass kein thermischer Bypass entsteht und somit die gesamte thermische Energie über den Wärmeflusssensor 2 abfliesst. Dies hat den Vorteil, dass das Signal viel stärker ausfallen wird. Der Wärmeflusssensor 2 überdeckt in diesem Fall den Kathodenableiter 6 bzw. den Anodenableiter 7 vollflächig.

Optimal ist ein Kühlkörper 9 mit einer thermisch leitfähigen Klebeschicht K, mittels einer Lotverbindung oder durch mechanische Pressbefestigung auf der kalten Seite (Rückseite) des mindestens einen Wärmeflusssensors 2 unlösbar stoffschlüssig befestigt. Vor allem muss eine ausreichend gute Wärmeübertragung erreicht sein und die Klebeverbindung muss auch bei höheren Temperaturen erhalten bleiben. Der Kühlkörper 9 stellt einen sogenannten "heat-sink" dar und kann eine aktive oder passive Kühlung des mindestens einen Wärmeflusssensors 2 bewerkstelligen. Je nach Ausgestaltung des Kühlkörpers 9, beispielsweise als Peltier-Element, kann bei Stromumkehr auch eine Aufheizung des Wärmeflusssensors 2 und damit sogar der Batterie 5 erfolgen. Der kalorimetrische Messaufbau kann auch Temperaturänderungen der Batterie 5 während der Wärmeflussmessung bewirken. Die Temperaturänderungen werden während oder nach erfolgter Wärmeflussmessung von der Datenverarbeitungs- und Steuerelektronik 11 zur Auswertung an ein Batteriemanagementsystem übertragen.

Im Betrieb der Batterie erwärmen sich die Kathodenableiter 6 und Anodenableiter 7 je nach entnommener Batterieleistung unterschiedlich stark, was als Joulesche Erwärmung oder joule heating-Effekt bekannt ist. Entsprechend ist der mit der Sensoreinheit 1 messbare Wärmestrom abhängig vom Betriebszustand der Batterie 5 bzw. des Batteriestapels 10. Die Heizleistung ist dabei proportional zum Produkt aus dem Quadrat der entnommenen Stromstärke und dem Widerstand der Batterie 5 bzw. des Batteriestapels 10. Die Joulesche Erwärmung muss bei der Bestimmung des Wärmeflusses entsprechend berücksichtigt werden, um eine genaue Qualitätskontrolle bzw. Bestimmung des Gesundheitszustandes einer Batterie bzw. eines Batteriestapels beim Durchlauf beispielsweise während eines Lade-, Entladezyklus, eines Teillade- oder Teilentladevorgangs zu erreichen. Dabei kann die jeweilige Joulsche Erwärmung anhand bekannter Algorithmen bzw. bestimmter Fehlerwerte mit dem gemessenen Wärmefluss verrechnet werden.

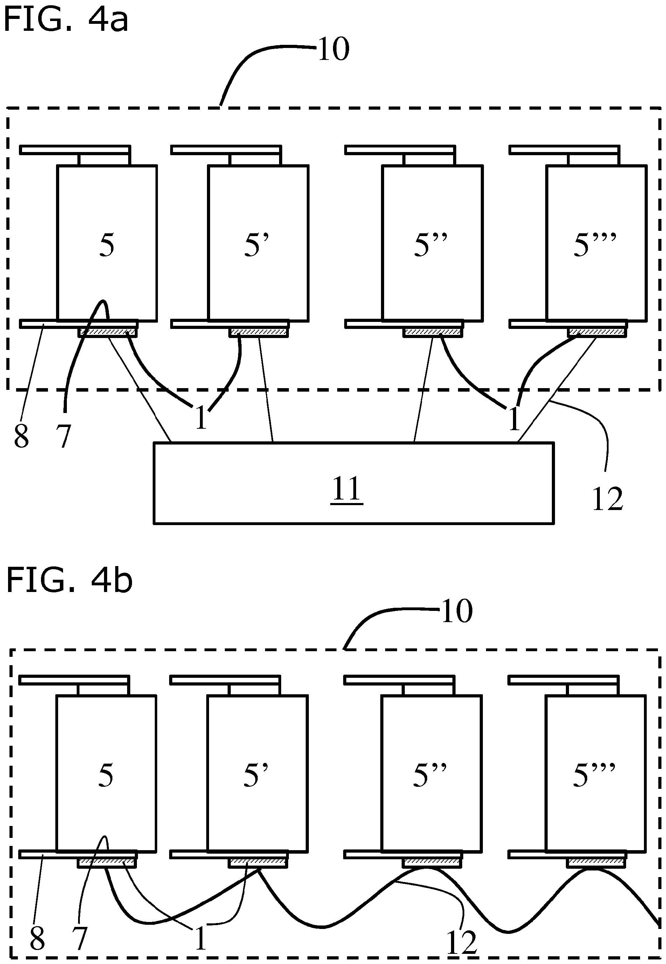

In Figur 4a ist der Batteriestapel 10 beispielhaft mit vier Batterien 5, 5', 5", 5‴ gezeigt. Der Batteriestapel 10 definiert sich darin, dass sich die Batterien 5, 5', 5", 5‴ in räumlicher Nähe zueinander befinden und somit gleiche oder sehr ähnliche äussere Umwelteinflüsse erfahren. Üblicherweise befinden sich die Batterien in derselben Verpackung und bilden somit einen Batteriestapel 10. Dabei können die Batterien 5, 5', 5", 5‴ in elektrischer Kommunikation (Serien oder Parallelschaltung) stehen, müssen aber nicht.

Jeder Batteriekontakt 8 jeder Anode bzw. jedes Anodenableiters 7 ist hier mit einer Sensoreinheit 1 versehen, welche die Bestimmung des Wärmeflusses erlaubt. Bei der Befestigung der Sensoreinheit 1 muss darauf geachtet werden, dass ein thermisch leitfähiger Kontakt des Wärmeflusssensors 2 mit dem jeweiligen Batteriekontakt 8 ausgeführt wird. Jede Sensoreinheit 1 ist über eine Kommunikationsverbindung 12 mit der Datenverarbeitungselektronik 11 verbunden.

Wie in Figur 4b gezeigt, können die Sensoreinheiten 1 einzelner Batterien 5, 5', 5", 5‴ des Batteriestapels 10 auch in Reihe geschaltet über Kommunikationsverbindungen 12 an eine Datenverarbeitungselektronik 11 angeschlossen werden.

Die Batterien 5, 5', 5", 5‴ des Batteriestapels 10 sind zeitgleich gleichen Umwelteinflüssen ausgesetzt. Bei der Lagerung und dem Auf- und Entladen mitteln sich die äusseren Einflüsse heraus und der Wärmefluss an den Elektroden 6, 7 der Batterien 5, 5', 5", 5‴ kann gemessen und verglichen werden.

Die Kommunikation zwischen einzelnen Sensoreinheiten 1 ist entweder über ein Kabel oder über ein Drahtlossystem möglich. Im Falle der Verbindung über ein Kabel, kann die Datenerfassung der Wärmeflusssensoren 2 und der Zusatzsensoren 3, beispielsweise von Temperatursensoren, auch über eine zentrale Datenverarbeitungselektronik 11 gewährleistet werden. Die aufgezeichneten Daten der Datenverarbeitungselektronik 11 können weiterführend über eine Wirelessschnittstelle oder über ein Kabel jederzeit von einem Rechner ausgelesen und graphisch dargestellt werden.

Um ein Verfahren zur Qualitätskontrolle einer Batterie 5 durchführen zu können, muss die Sensoreinheit 1, insbesondere der Wärmeflusssensor 2 am Kathodenableiter 6 und/oder Anodenableiter 7 der Batterie 5, bzw. an an einem Batteriekontakt 8 befestigt werden. Die Sensoreinheit 1 und der Wärmeflusssensor 2 weisen die oben beschriebenen Merkmale auf. Dabei wird die Sensorseite S des Wärmeflusssensors 2 thermisch bestmöglich leitend am Kathodenableiter 6 und/oder Anodenableiter 7 bzw. Batteriekontakt 8 befestigt. Wenn die Sensoreinheit 1 dauerhaft an der Batterie 5 befestigt werden soll, wird der Wärmeflusssensor 2 unlösbar stoffschlüssig am Kathodenableiter 6 und/oder Anodenableiter 7 bzw. Batteriekontakt 8 befestigt werden. Die Sensorseite S muss dem Batteriekontakt 8 zugewandt angeordnet werden.

Nach Befestigung des Wärmeflusssensors 2, der Sensoreinheit 1 samt Kontaktierung der Kommunikationsverbindungen 12 an der Datenverarbeitungselektronik 11, werden die Wärmeflüsse an den Kathodenableitern 6 bzw. Anodenableitern 7 während einer bestimmten Zeit aufgenommen. Die von den Wärmeflusssensoren 2 aufgenommenen Daten werden an die Datenverarbeitungselektronik 11 übermittelt, wo diese Daten ausgewertet, dargestellt und/oder gespeichert werden. Die Entwicklung der Wärmeflüsse durch die Batterien während der Messzeit, aufgrund der Änderungen der äusseren thermischen Bedingungen, inneren nicht erwünschten chemischen Reaktionen (Kurzschluss) oder erwünschten chemischen und physikalischen Reaktionen (Laden, entlade) während der Lagerung, dem Transport bzw. während der Entladung und Aufladung der Batterien wird mittels Datenverarbeitungselektronik 11 aufgenommen und kann mit Sollwerten verglichen werden. Die Sollwerte können entweder aus vorgängig durchgeführten Wärmeflussmessungen (Testroutinen) an Batterien 5 bei denselben Bedingungen oder aus zeitgleichen Messungen an unterschiedlichen Batterien 5, 5', 5", 5‴ des gleichen Batteriestapels 10 stammen. Sollte sich der Wärmefluss an den verschiedenen Batteriekontakten 8 zu stark von den Sollwerten unterscheiden, erfolgt eine Benachrichtigung des Benutzers durch die Datenverarbeitungselektronik 11. Auf der Leiterplatte 4 kann dazu ein Display oder eine LED angeordnet sein, welche bei vom Sollwert abweichenden Wärmeflusssignalen ausgelöst wird. Wenn die gemessenen Wärmeflüsse im Bereich der Sollwerte liegen, erfolgt keine Fehlermeldung. Es kann auch eine Anzeige von der Sensoreinheit 1 und damit von der Batterie 5 beabstandet an einem zentralen Ort des Batteriestapels 10 angeordnet sein. Fehlermeldungen aufgrund unzulässiger Wärmeflüsse können auch an ein Batteriemanagementsystem via Kabel oder drahtlos übertragen werden oder vom Batteriemanagementsystem ausgewertet werden.

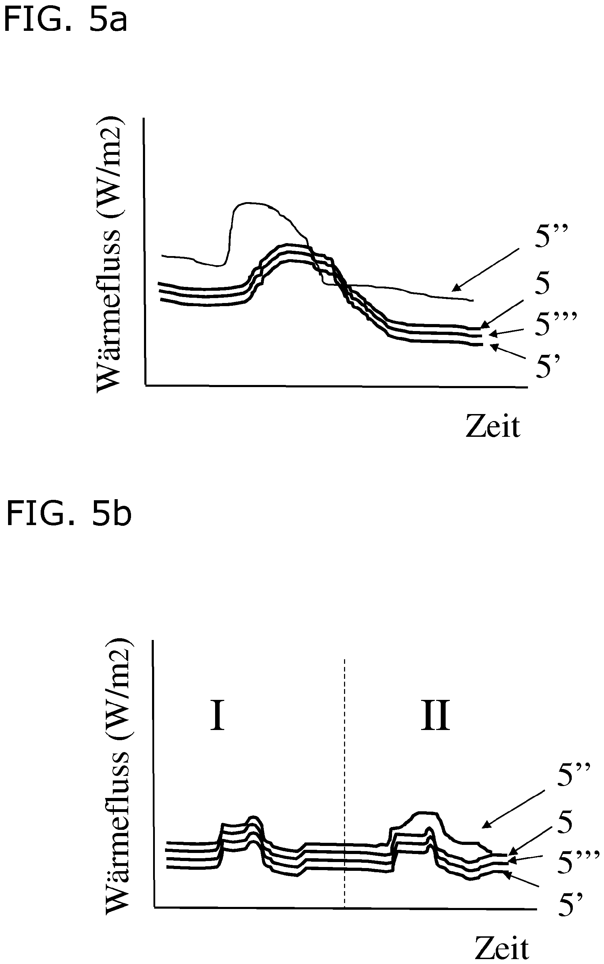

Im Experiment aus dem das Diagramm gemäss Figur 5a erstellt wurde, wurden Wärmeflussmessungen an vier Batterien 5, 5', 5", 5‴ eines Batteriestapels 10 zur gleichen Zeit einer Änderung der äusseren thermischen Bedingungen ausgesetzt. Deutlich erkennbar ist eine Änderung des Wärmeflusses an den Batteriekontakten 8 aller vier Batterien mit der Zeit. Während drei Batterien 5, 5', 5‴ eine parallel verschobene zeitgleiche Entwicklung der Wärmeflüsse zeigen, zeigt Batterie 5" eine zeitlich verschobene Reaktion und einen anderen Verlauf des Wärmeflusses mit der Zeit am nahezu selben Messort. Daraus ist auf einen Defekt der Batterie 5" zu schliessen, welcher beispielsweise durch ein Warnsignal von der Datenverarbeitungselektronik 11 angezeigt wird.

In einem Experiment, in welchem eine zeitweise Aufladung der vier Batterien 5, 5', 5", 5‴ durchgeführt wurde, wurden die Messwerte des Diagrammes gemäss Figur 6b erhalten. Dabei wurden zwei Aufladeprozesse I, II zeitlich versetzt für eine Zeitspanne wiederholt und die Antwort der Wärmeflusssensoren 2 der jeweiligen Sensoreinheiten 1 der Batterien 5, 5', 5", 5‴ wurden gespeichert und im Diagramm dargestellt. Gut zu erkennen ist die Abweichung des Wärmeflussverlaufes im Intervall II der Batterie 5", welche auf einen Defekt oder eine verkürzte Lebensdauer der Batterie 5" hinweist. Da bei der Aufladung und Entladung von Batterien 5 ein Wärmefluss durch einen Wärmeflusssensor 2 an den Elektroden 6, 7 messbar ist, kann eine relative Abweichung der Reaktionen verschiedener Batterien 5 gemessen werden. Wenn die gemessenen Wärmeflüsse der Batterien 5 zu stark voneinander abweichen, weist das auf einen veränderten state of health (SOH) hin.

Der state of health (SOH) kann aus Referenzkurven oder speziellen Merkmalen in Kurven (Peakverschiebung, Intensitätsverminderungen) eruiert werden und dem Anwender über eine Anzeige mitgeteilt werden. Für noch genauere State of health-Angaben, können weitere Einflussparameter wie Temperatur, Spannungsverlauf, elektrischer Widerstand, etc. der Batterie 5 beigezogen werden. Mittels der (SOH), kann auch die Kapazität der Batterie genauer ermittlet werden, welche als wichtige Grösse zur Bestimmung des State of Charge (SOH) dienen kann. Durch diese Grössen kann dann mittels Batteriemanagementsystem ein Überladen der Batterie 5 vermieden werden, welches durch ein "elektroden dibalancing" auftreten kann. Dieses "elektroden dibalancing" kann mit herkömmlichen Mitteln nicht detektiert werden. Konkret heisst das, wenn die Elektroden unterschiedlich altern (detektierbar durch die oben gezeigten Wärmeflusssignale an den jeweiligen Elektrodenableitern), dann kann es sein, dass die gealterten Elektroden zu stark geladen oder entladen werden, da sich ihre Potentiale zueinander durch die Alterung verändert haben. Durch gezielte Zell-Ladepotential Erniedrigung beim Laden bzw. Zell-Ladepotential Erhöhung beim Entladen von Batterien mit gealterten Elektroden, kann einer Überladung bzw. zu starke Entladung dieser vorgebeugt werden, was als Schutz vor "thermal runaway" und noch stärkerem Altern der Elektroden dienen kann.

Zur Optimierung der Wärmeflussmessungen können die Batterien 5 bzw. der gesamte Batteriestapel 10 thermisch isoliert, mit Wänden aus einem thermisch isolierenden Material ausgestaltet sein.

Durch die Bestimmung des Wärmeflusssensorsignals der Batterie 5 können state of health (SOH), state of charge (SOC) und state of Function (SOF) der Batterie 5 bestimmt werden.

Das Wärmeflusssensorsignal kann temperaturkompensiert sein, wobei der Temperatursensor 3 als Zusatzsensor 3 entweder auf der Elektrode 6, 7, dem Batteriekontakt 8 oder auf der Leiterplatte 4 integriert sein kann und mit dieser in thermischer Verbindung steht.

Der kalorimetrische Messaufbau bzw. die Sensoreinheit 1 können dauerhaft, während der gesamten Lebenszeit der Batterie 5 mit dieser verbunden bleiben oder nach Durchführung einer Qualitätskontrolle wieder entfernt werden. Damit kann der kalorimetrische Messaufbau mehrfach wiederverwertbar gestaltet sein.

Der Verbund von Sensoreinheiten 1 kann an eine zentrale Datenverarbeitungselektronik 11 angeschlossen sein, welche zusätzlich durch eine drahtlose Schnittstelle mit dem Internet verbunden sein kann. Über einen zusätzlichen GPS-Chip in der Sensoreinheit 1 oder der Datenverarbeitungselektronik 11 können Sensoreinheit 1 und/oder Datenverarbeitungselektronik 11 zusätzlich geortet werden.

Der Messaufbau dient zur Überprüfung der Batterie nach der Herstellung und während ihres Gebrauchs und kann Teil eines Batteriemanagementsystems sein, welches die thermische Belastung von Batterien bei der Lagerung, dem Transport aber vor allem während der Entladung und Aufladung der Batterien überwacht und gegebenenfalls durch Kühlen, Heizen oder gezieltem Laden/Entladen von individuellen Batterien/Batteriestapel steuert.

Die aufgenommenen Wärmeflusssensorsignale können von dem Batteriemanagementsystem zur Regelung der Kühlung/Heizung, Regelung des Ladeprozesses der Batterie und Regelung des Entladeprozesses der Batterie verwendet werden. Je nach Aufnahme der Wärmeflüsse an mindestens einer Batterie 5 kann das Batteriemanagementsystem mittels Datenverarbeitungselektronik 11 das Kühlen oder Heizen des Kühlkörpers 9 am Wärmeflusssensor 2 regeln. Damit kann die Belastung der Batterie 5 gesteuert minimiert werden. Die Kühlung kann wahlweise aktiv mittels Peltier-Element oder Ventilator oder passiv durch Kühlrippen erfolgen. Bei aktiver Kühlung kann die benötigte Energie den Batterien 5 entnommen werden, was von der Datenverarbeitungselektronik 11 gesteuert werden kann.

Der kalorimetrische Messaufbau mit einer Sensoreinheit 1 zur Qualitätskontrolle des Betriebs einer Batterie 5 kann thermisch leitend an einer Stromklemme befestigt sein. Der Wärmeflusssensor 2 bzw. die Sensoreinheit 1 ist wiederum am metallischen Teil der Stromklemme, welcher mit den Elektroden in elektrischen Kontakt kommt, aufgeklebt, aufgegepresst oder geschweisst.

Diese Stromklemme wird standardmässig zur elektrischen Kontaktierung der Batterie 5 verwendet, wodurch eine Aufladung bzw. Teilaufladung durchführbar ist. Derartige Stromklemmen sind in unterschiedlichen Ausführungsformen auf dem Markt erhältlich. Koppelt man nun thermisch die Sensoreinheit 1 an diese Stromklemme, welche im Betrieb mechanisch auf den Kathodenableiter 6 bzw. den Anodenableiter 7 bzw. den entsprechenden Batteriekontakt 8 geklemmt wird, kann eine Wärmeflusssensormessung wie oben beschrieben einfach erfolgen. Auch hier kann die Sensoreinheit 1 unterschiedlich ausgestaltet sein, mit Zusatzsensoren 3, einer Leiterplatte 4, wobei wahlweise Verkabelung ausgeführt ist oder eine drahtlose Kommunikation mit der Datenverarbeitungselektronik 11 möglich ist. Nach der Herstellung einer Batterie 5 kann eine solche Stromklemme einfach und schnell angeschlossen werden und eine Aufladung bzw. Qualitätskontrolle der Batterie 5 vorgenommen werden. Die Sensoreinheit 1 bzw. der Wärmeflusssensor 2 könnten in eine Aussparung in der Stromklemme integriert werden, wobei dafür gesorgt wird, dass ein flächiger Kontakt zwischen Sensorseite S des Wärmeflusssensors 2 mit dem Kathodenableiter 6, Anodenableiter 7 bzw. dem Batteriekontakt 8 erreicht wird.

Die Sensoreinheit 1 kann als voll integrierter digitaler Wärmeflusssensor ausgeführt sein, zum Beispiel in einem Micro Chip Package (TO Gehäuse).

In einer weiteren Ausführungsform kann der mindestens eine Wärmeflusssensor 2 zwischen zwei Elektroden zweier benachbarter Batterien 5 integriert sein, wobei das Differenzsignal gemessen werden kann. In einem Aufbau eines Batteriestapels 10 mit Pouch-Zellen, in welchem die Elektrodenableiter 6, 7 in Serie aufeinander befestigt sind, wird dazwischen ein Wärmeflusssensor 2 integriert. Dies kann sowohl zwischen zwei Elektrodenableitern 6, 7 die elektrisch miteinander verbunden sind als auch zwischen Elktrodenableitern 6, 7 welche elektrisch voneinander isoliert sind stattfinden.

### Bezugszeichenliste

1 Sensoreinheit
2 Wärmeflusssensor
S Sensorseite
3 Zusatzsensor (Temperatur- , Feuchte-, Strom-, Spannungssensor)
4 Leiterplatte
5 Batterie
6 Kathodenableiter
7 Anodenableiter
8 Batteriekontakt
9 Kühlkörper
10 Batteriestapel
11 Datenverarbeitungselektronik
12 Kommunikationsverbindung
13 Elektrodenzuleiter
Q Querrichtung
K Verbindungsschicht / Klebeschicht

## Patentansprüche

1. Gerät, bestehend aus einer Batterie und einem kalorimetrischen Messaufbau mit einer Sensoreinheit (1) zur Qualitätskontrolle des Betriebs der Batterie (5), welche eine Kathode und eine Anode umfasst, insbesondere zur Bestimmung des Gesundheitszustandes (SOH) der Batterie (5) bzw. eines Batteriestapels (10) umfassend mehrere solcher Batterien (5), wobei der Messaufbau bzw. die Sensoreinheit (1) via einer Kommunikationsverbindung (12) mit einer Datenverarbeitungselektronik (11) verbunden ist und damit Sensormesswerte aufgenommen und verarbeitet werden,
**dadurch gekennzeichnet, dass**
die Sensoreinheit (1) mindestens einen Wärmeflusssensor (2) umfasst, der mit seiner Sensorseite (S) an einem Kathodenableiter (6) und/oder einem Anodenableiter (7) bzw. einem entsprechenden Batteriekontakt (8) der Batterie (5) bzw. des Batteriestapels (10) aufliegend thermisch in Querrichtung (Q) leitend temporär oder dauerhaft befestigt ist, womit Wärmeflusssensorsignale vom Kathodenableiter (6) und/oder Anodenableiter (7) bzw. Batteriekontakt (8) der Batterie (5) auslesbar sind und mittels der Kommunikationsverbindung (12) an die Datenverarbeitungselektronik (11) übertragbar und weiterverarbeitbar sind.

2. Gerät nach Anspruch 1, wobei am Wärmeflusssensor (2) ein Kühlkörper (9) der Sensorseite (S) und dem Kathodenableiter (6) und/oder Anodenableiter (7) bzw. Batteriekontakt (8) gegenüberliegend thermisch leitfähig befestigt ist, wobei durch den Kühlkörper (9) eine Kühlung bzw. Aufheizung der Batterie (5) bzw. des Batteriestapels (10) über den Wärmeflusssensor (2) ermöglicht ist.

3. Gerät nach einem der vorhergehenden Ansprüche, wobei der Wärmeflusssensor (2) derart ausgeführt ist, dass der Wärmeflusssensor (2) den Kathodenableiter (6) bzw. den Anodenableiter (7) bzw. den Batteriekontakt (8) nur teilweise flächig überdeckend befestigbar ist.

4. Gerät nach einem der vorhergehenden Ansprüche, wobei die Sensoreinheit (1) neben dem Wärmeflusssensor (2) mindestens einen Zusatzsensor (3), in Form eines Temperatur- , Feuchte-, Strom- und/oder Spannungssensors, aufweist dessen Signale über eine Kommunikationsverbindung (12) an die Datenverarbeitungselektronik (11) übertragbar sind.

5. Gerät nach einem der vorhergehenden Ansprüche, wobei die Sensoreinheit (1) eine Leiterplatte (4) umfasst, auf welcher der Wärmeflusssensor (2) und der Zusatzsensor (3) angeordnet sind, wobei die Sensoreinheit (1) über die Leiterplatte (4) via Kommunikationsverbindung (12) mit der Datenverarbeitungselektronik (11) verbunden ist.

6. Gerät nach Anspruch 5, wobei der Kühlkörper (9) den Wärmeflusssensor (2) bzw. die Leiterplatte (4) rückseitig, vom Kathodenableiter (6) und/oder Anodenableiter (7) bzw. Batteriekontakt (8) abgewandt und seitlich umschliesst.

7. Gerät nach einem der vorhergehenden Ansprüche, wobei die Sensoreinheit (1) bzw. der Wärmeflusssensor (2) thermisch leitend an einem elektrisch leitfähigen Teil einer Stromklemme, genutzt zur Aufladung und Prüfung einer Batterie (5) bzw. eines Batteriestapels (10), unlösbar befestigt ist.

8. Gerät nach Anspruch 7, wobei der Wärmeflusssensor (2) an der Stromklemme unlösbar aufgeklebt, aufgepresst oder geschweisst ist.

9. Verfahren zur Qualitätskontrolle einer Batterie (5), **gekennzeichnet durch** die Schritte:
- Befestigung einer Sensoreinheit (1) eines kalorimetrischen Messaufbaus an einem Kathodenableiter (6) und/oder einem Anodenableiter (7) bzw. einem entsprechenden Batteriekontakt (8),
wobei die Batterie und der kalorimetrische Messaufbau ein Gerät nach einem der Ansprüche 1 bis 8 bilden,
wobei der mindestens eine Wärmeflusssensor (2) mit seiner wärmesensitiven Sensorseite (S) dem Kathodenableiter (6) und/oder einem Anodenableiter (7) bzw. einem entsprechenden Batteriekontakt (8) zugewandt befestigt wird, bevor während Lagerung, Transport und/oder Aufladungs- und Entladungsvorgang ein
- Auslesen von Wärmeflussdaten des mindestens einen Wärmeflusssensors (2) über die Kommunikationsverbindung (12) mittels der Datenverarbeitungselektronik (11), Speicherung der Wärmeflusssensordaten in einem Datenspeicher und anschliessenden
- Vergleich der Wärmeflussdaten mit Sollwerten zur Bestimmung von Abweichungen und damit zur Beurteilung des Gesundheitsstatus (SOH) der Batterie (5).

10. Verfahren zur Qualitätskontrolle einer Batterie (5) gemäss Anspruch 9, wobei der mindestens eine Wärmeflusssensor (2) unlösbar stoffschlüssig oder lösbar gepresst mit seiner wärmesensitiven Sensorseite (S) dem Kathodenableiter (6) und/oder einem Anodenableiter (7) bzw. einem entsprechenden Batteriekontakt (8) zugewandt befestigt wird.

11. Verfahren zur Qualitätskontrolle einer Batterie (5) gemäss
einem der Ansprüche 9 bis 10, wobei jeweils eine Sensoreinheit (1) an jeder Batterie (5, 5', 5", 5‴) eines Batteriestapels (10) befestigt wird,
jede Sensoreinheit (1) mittels einer Kommunikationsverbindung (12) mit der Datenverarbeitungselektronik (11) verbunden wird, bevor zeitgleich Wärmeflussmessungen an jeder Batterie (5, 5', 5", 5‴) des Batteriestapels (10) durchgeführt werden und
die Wärmeflusssensordaten der Batterien (5, 5', 5", 5‴) miteinander verglichen werden.

12. Verfahren zur Qualitätskontrolle einer Batterie nach einem der Ansprüche 9 bis 11, wobei der der mindestens eine Wärmeflusssensor (2) mit seiner Sensorseite (S) auf einer thermischen Homogenisierungsplatte thermisch leitend befestigt wird, wobei die thermische Homogenisierungsplatte mittels einer elektrischen Isolationsplatte auf dem Kathodenableiter (6) und/oder dem Anodenableiter (7) und/oder dem Batteriekontakt (8) eines Batteriestapels (10) befestigt wird, sodass Wärmeflussmessungen an einem Ort des Batteriestapels (10) mittels einem Wärmeflusssensor (2) durchgeführt werden.

13. Verfahren zur Qualitätskontrolle einer Batterie nach einem der Ansprüche 9 bis 12, wobei die Sensoreinheit (1) bzw. der Wärmeflusssensor (2), die Kommunikationsverbindung (12) und die Datenverarbeitungselektronik (11) während der gesamten Lebensdauer der Batterie (5) bzw. des Batteriestapels (10) an diesen verbleiben.

14. Verwendung eines Geräts nach einem der Ansprüche 1 bis 8, wobei die Sensoreinheit (1) jeweils an dem Kathodenableiter (6) und/oder Anodenableiter (7) bzw. entsprechendem Batteriekontakt (8) jeder Batterie (5, 5', 5", 5‴) eines Batteriestapels (10) bzw. an einem Elektrodenzuleiter (13) des Batteriestapels (10) thermisch verbunden und mit der Datenverarbeitungselektronik (11) elektrisch verbunden ist, sodass Wärmeflussmessdaten der einzelnen Batterien (5, 5', 5", 5‴) bzw. des Batteriestapels (10) miteinander vergleichbar aufnehmbar sind.

15. Verwendung nach Anspruch 14, wobei der kalorimetrische Messaufbau Teil eines Batteriemanagementsystems zur Regelung der Kühlung/Heizung, Regelung des Ladeprozesses und Regelung des Entladeprozesses der Batterie (5) bzw. des Batteriestapels (10) ist.

## Claims

1. A device consisting of a battery and a calorimetric measurement set-up with a sensor unit (1) for quality control of the operation of a battery (5), which comprises a cathode and an anode, in particular for determining the state of health (SOH) of the battery (5) or a battery stack (10) comprising a plurality of such batteries (5), wherein the measurement set-up and sensor unit (1) is connected to data processing electronics (11) via a communication link (12) and sensor measurement values are recorded and processed therewith,
**characterized in that**
the sensor unit (1) comprises at least one heat flow sensor (2), which is fastened temporarily or permanently to a cathode collector (6) and/or an anode collector (7), or a corresponding battery contact (8) of the battery (5) or battery stack (10), with its sensor side (S) fixed resting thereon in such manner as to conduct heat in a transverse direction (Q), whereby heat flow sensor signals from the cathode collector (6) and/or anode collector (7), and the battery contact (8) of the battery (5) can be read out, and can be transferred by means of the communication link (12) to the data processing electronics (11) and processed further.

2. The device according to Claim 1, wherein a cooling body (9) is attached in thermally conductive manner to the heat flow sensor (2) opposite the sensor side (S) and the cathode collector (6) and/or anode collector (7) and battery contact (8), wherein cooling or heating of the battery (5) or battery stack (10) is enabled by the cooling body (9) via the heat flow sensor (2).

3. The device according to one of the preceding claims, wherein the heat flow sensor (2) is designed such that the heat flow sensor (2) can be attached so that it only partially covers the surface of the cathode collector (6) and anode collector (7), or the battery contact (8).

4. The device according to any one of the preceding claims, wherein in addition to the heat flow sensor (2) the sensor unit (1) has at least one additional sensor (3) in the form of a temperature, humidity, current and/or voltage sensor, whose signals can be transferred to the data processing electronics (11) via a communication link (12).

5. The device according to any one of the preceding claims, wherein the sensor unit (1) comprises a circuit board (4), on which the heat flow sensor (2) and the additional sensor (3) are arranged, wherein the sensor unit (1) is connected to the data processing electronics (11) via communication link (12) through the circuit board (4).

6. The device according to Claim 5, wherein the cooling body (9) encloses the heat flow sensor (2) and the circuit board (4) at the rear, on the side facing away from the cathode collector (6) and/or the anode collector (7), or the battery contact (8), and at the sides.

7. The device according to any one of the preceding claims, wherein the sensor unit (1) and the heat flow sensor (2) is attached non-detachably in thermally conductive manner to an electrically conductive part of a current clamp terminal, used for purposes of charging and testing a battery (5) or battery stack (10).

8. The device according to Claim 7, wherein the wherein the heat flow sensor (2) is adhesively bonded, pressed or welded non-detachably onto the current clamp terminal.

9. A method for performing quality control of a battery (5), **characterized by** the steps:
- attaching a sensor unit (1) of a calorimetric measurement set-up to a cathode collector (6) and/or an anode collector (7), or to a corresponding battery contact (8), wherein the battery and the calorimetric measurement set-up constitute a device according to any one of Claims 1 to 8,
wherein the at least one heat flow sensor (2) is fastened with its heat-sensitive sensor side (S) facing the cathode collector (6) and/or anode collector (7), or a corresponding battery contact (8), before during storage, transport, and/or a charging and discharging process;
- reading out of heat flow data from the at least one heat flow sensor (2) via the communication link (12) by means of the data processing electronics (11), storing the heat flow sensor data in a data memory, and then
- comparing the heat flow data with setpoint values to determine deviations, and thus assess the state of health (SOH) of the battery (5).

10. The method for performing quality control of a battery (5) according to Claim 9, wherein the at least one heat flow sensor (2) is fastened non-detachably by material bonding or detachably by pressing with its heat-sensitive sensor side (S) facing the cathode collector (6) and/or an anode collector (7), or a corresponding battery contact (8) .

11. The method for performing quality control of a battery (5) according to one of Claims 9 to 10, wherein one sensor unit (1) is fastened to each battery (5, 5', 5", 5‴) of a battery stack (10), each sensor unit (1) is connected to the data processing electronics (11) via a communication link (12), before heat flow measurements are carried out simultaneously on each battery (5, 5', 5", 5‴) of the battery stack (10), and the heat flow sensor data from the batteries (5, 5', 5", 5‴) are compared with each other.

12. The method for performing quality control of a battery according to any one of Claims 9 to 11, wherein the at least one heat flow sensor (2) is mounted by its sensor side (S) in thermally conductive manner on a thermal homogenisation plate, wherein the thermal homogenisation plate is attached to the cathode collector (6), and/or the anode collector (7) and/or the battery contact (8) of the battery stack (10) by means of an electrical insulation plate, so that heat flow measurements are carried out at one location on the battery stack (10) by means of a heat flow sensor (2).

13. The method for performing quality control of a battery according to any one of Claims 9 to 12, wherein the sensor unit (1) and heat flow sensor (2), the communication link (12), and the data processing electronics (11), remain on the battery (5) or battery stack (10) for the entire duration of the service life of the battery (5) or battery stack (10).

14. Use of a device according to any one of Claims 1 to 8, wherein the sensor unit (1) is connected thermally to each cathode collector (6) and/or anode collector (7) or corresponding battery contact (8) of each battery (5, 5', 5", 5‴) in a battery stack (10) and/or an electrode feed (13) in the battery stack (10), and electrically to the data processing electronics (11), so that heat flow measurement data from the individual batteries (5, 5', 5", 5‴) or the battery stack (10) can be recorded so as to be comparable with each other.

15. The use according to Claim 14, wherein the calorimetric measurement set-up is part of a battery management system for regulating the heating/cooling, regulating the charging process and regulating the discharging process of the battery (5) or battery stack (10).

## Revendications

1. Appareil composé d'une batterie et d'un capteur et d'un dispositif de mesure calorimétrique comportant une unité de capteur (1) pour le contrôle qualité du fonctionnement de la batterie (5), qui comprend une cathode et une anode, notamment pour la détermination de l'état de santé (SOH) de la batterie (5) ou d'une pile de batteries (10) comprenant plusieurs telles batteries (5), dans lequel le dispositif de mesure ou l'unité de capteur (1) sont connectés via une connexion de communication (12) à un système électronique de traitement des données (11) et les mesures du capteur sont ainsi enregistrées et traitées, **caractérisé en ce que** l'unité de capteur (1) comprend au moins un capteur de flux thermique (2), dont le côté capteur (S) est fixé sur un parafoudre cathodique (6) et/ou un parafoudre anodique (7) ou un contact de batterie correspondant (8) de la batterie (5) ou de la pile de batteries (10) de manière thermoconductrice temporairement ou durablement dans la direction transversale (Q), moyennant quoi des signaux du capteur de flux thermique provenant du parafoudre cathodique (6) et/ou du parafoudre anodique (7) ou du contact de batterie (8) de la batterie (5) peuvent être lus et transmis à l'électronique de traitement des données (11) et traités ultérieurement au moyen de la connexion de communication (12).

2. Appareil selon la revendication 1, dans lequel sur le capteur de flux thermique (2), un dissipateur thermique (9) du côté capteur (S) et le parafoudre cathodique (6) et/ou le parafoudre anodique (7) ou le contact de batterie (8) sont fixés de manière thermoconductrice en face, dans lequel le dissipateur thermique (9) permet un refroidissement ou un chauffage de la batterie (5) ou de la pile de batteries (10) via le capteur de flux thermique (2).

3. Appareil selon une des revendications précédentes, dans lequel le capteur de flux thermique (2) est conçu de telle sorte que le capteur de flux thermique (2) ne puisse recouvrir que partiellement le parafoudre cathodique (6) ou le parafoudre anodique (7) ou le contact de batterie (8) .

4. Appareil selon une des revendications précédentes, dans lequel l'unité de capteur (1) à côté du capteur de flux thermique (2), présente au moins un capteur supplémentaire (3), sous la forme d'un capteur de température, d'humidité, d'électricité et de tension, dont les signaux peuvent être transmis via une connexion de communication (12) à l'électronique de traitement des données (11).

5. Appareil selon une des revendications précédentes, dans lequel l'unité de capteur (1) comprend une plaquette de circuit imprimé (4), sur laquelle le capteur de flux thermique (2) et le capteur supplémentaire (3) sont disposés, dans lequel l'unité de capteur (1) est connectée via la plaquette de circuit imprimé (4) via une connexion de communication (12) avec l'électronique de traitement des données (11).

6. Appareil selon la revendication 5, dans lequel l e dissipateur thermique (9), le capteur de flux thermique (2) ou la plaquette de circuit imprimé (4) au dos, se détourne ou enveloppe latéralement le parafoudre cathodique (6) et/ou le parafoudre anodique (7) ou contact de batterie (8).

7. Appareil selon une des revendications précédentes, dans lequel l'unité de capteur (1) ou le capteur de flux thermique (2) est fixé de manière thermoconductrice à une partie électriquement conductrice d'une borne d'alimentation, utilisée pour charger et tester une batterie (5) ou une pile de batteries (10), de manière inamovible.

8. Appareil selon la revendication 7, dans lequel le capteur de flux thermique (2) est collé, pressé ou soudé en permanence à la borne de puissance.

9. Procédé de contrôle qualité d'une batterie (5), **caractérisé par** les étapes consistant à :
- fixer un bloc capteur (1) d'un dispositif de mesure calorimétrique à un parafoudre cathodique (6) et/ou un parafoudre anodique (7) ou un contact de batterie (8) correspondant, dans lequel la batterie et le dispositif de mesure calorimétrique constituent un dispositif selon une des revendications 1 à 8,
dans lequel le au moins un capteur de flux thermique (2) est fixé avec son côté capteur thermosensible (S) tourné vers le parafoudre cathodique (6) et/ou un parafoudre anodique (7) ou un contact de batterie correspondant (8) avant que pendant le processus de stockage, transport et/ou chargement et/ou déchargement
- une lecture des données de flux thermique d'au moins un capteur de flux thermique (2) via la connexion de communication (12) au moyen de l'électronique de traitement des données (11), mémorisation des données du capteur de flux thermique dans une mémoire de données, puis
- une comparaison des données de flux thermique avec les valeurs cibles pour déterminer les écarts et ainsi évaluer l'état de santé (SOH) de la batterie (5).

10. Procédé de contrôle de qualité d'une batterie (5) selon la revendication 9, dans lequel le au moins un capteur de flux thermique (2) pressé de manière permanente de manière cohésive ou amovible avec son côté capteur thermosensible (S) est fixé en face du parafoudre cathodique (6) et/ou du parafoudre anodique (7) ou contact de batterie correspondant (8).

11. Procédé de contrôle qualité d'une batterie (5) selon une des revendications 9 à 10, dans lequel une unité de capteur (1) est fixée à chaque batterie (5, 5', 5", 5‴) d'une pile de batteries (10), chaque unité de capteur (1) est connectée à l'électronique de traitement des données (11) au moyen d'une connexion de communication (12) avant que des mesures de flux thermique soient effectuées simultanément sur chaque batterie (5, 5', 5'', 5''') de la pile de batteries (10) et que les données du capteur de flux thermique des batteries (5, 5', 5", 5‴) puissent être comparées les unes aux autres.

12. Procédé de contrôle qualité d'une batterie selon une des revendications 9 à 11, dans lequel au moins un capteur de flux thermique (2) est fixée de manière thermoconductrice avec son côté capteur (S) sur une plaque d'homogénéisation thermique, dans lequel la plaque d'homogénéisation thermique est fixée au conducteur cathodique (6) et/ou au conducteur anodique (7) et/ou au contact de batterie au moyen d'une plaque d'isolation électrique (8) d'une pile de batteries (10) est fixé de telle sorte que des mesures de flux thermique soient effectuées à un endroit de la pile de batteries (10) à l'aide d'un capteur de flux thermique (2).

13. Procédé de contrôle qualité d'une batterie selon une des revendications 9 à 12, dans lequel l'unité de capteur (1) ou le capteur de flux thermique (2), la connexion de communication (12) et l'électronique de traitement des données (11) restent sur celle-ci pendant toute la durée de vie de la batterie (5) ou de la pile de batteries (10) .

14. Utilisation d'un appareil selon une des revendications 1 à 8, dans laquelle l'unité de capteur (1) est connectée thermiquement au parafoudre cathodique (6) et/ou parafoudre anodique (7) ou contact de batterie correspondant (8) de chaque batterie (5, 5', 5'', 5''') d'une pile de batteries (10) ou est connectée électriquement à un fil d'électrode (13) de la pile de batteries (10) et à l'électronique de traitement des données (11), de telle sorte que les données de mesure du flux thermique provenant des batteries individuelles (5, 5', 5", 5‴) ou de la pile de batteries (10) puissent être enregistrées de manière comparable.

15. Utilisation selon la revendication 14, dans laquelle le dispositif de mesure calorimétrique fait partie d'un système de gestion de batterie pour la régulation du refroidissement/chauffage, la régulation du processus de charge et la régulation du processus de décharge de la batterie (5) ou de la pile de batteries (10).
